# EUROPÄISCHE PATENTSCHRIFT

(11) **EP 1 431 564 B1**
(45) Veröffentlichungstag und Bekanntmachung des Hinweises auf die Patenterteilung: **13.06.2007**
(21) Anmeldenummer: 03450272.4
(22) Anmeldetag: 04.12.2003
(51) Int. Cl.: F02M 21/02, F02B 17/00, F02B 43/04

(54) **Verfahren zum Betreiben einer mit Gas betriebenen Brennkraftmaschine**
Method for operating a gaseous fuel operated internal combustion engine
Méthode pour l'opération d'un moteur à combustion interne alimenté en gaz

(30) Priorität: 19.12.2002 AT 8562002 U
(43) Veröffentlichungstag der Anmeldung: 23.06.2004
(73) Patentinhaber: AVL List GmbH, 8020 Graz (AT)
(72) Erfinder: Piock, Walter, Dr., 8151 Hitzendorf (AT)
(74) Vertreter: Babeluk, Michael

(56) Entgegenhaltungen:
- EP-A- 0 798 453
- DE-A1- 19 923 346
- US-A- 3 703 886
- US-A- 4 865 001

## Beschreibung

Die Erfindung betrifft ein Verfahren zum Betreiben einer mit Gas betriebenen Brennkraftmaschine, wobei das Gas über eine Einblasevorrichtung in einen Brennraum eingeblasen und eine Schichtladung erzeugt wird, wobei ein Brenngas, vorzugsweise Erdgas, Wasserstoff oder ein Gemisch aus brennbaren Gasen, in eine vom Brennraum getrennte und über ein schaltbares Ventil mit diesem verbindbare Kammer eingeblasen und mit einem Zweitgas vermischt wird, und dass dieses Gasgemisch durch Öffnen des schaltbaren Ventils direkt in den Brennraum eingeblasen wird.

Die US 4,574,754 A1 offenbart eine Brennkraftmaschine für gasförmigen Brennstoff, bei der das Gas in den Brennraum so eingeblasen wird, dass eine Ladungsschichtung entsteht. Im Vergleich zu gasbetriebenen Brennkraftmaschinen mit homogener Gemischaufbereitung lässt sich durch die sauerstoffreiche Umgebung im Brennraum eine vollkommenere Verbrennung des Brenngases erzielen, was sich vorteilhaft auf Emissionen und Wirkungsgrad auswirkt. Nachteilig ist allerdings, dass bei dieser turbulenzgesteuerten Ladungsschichtung der Zündbereich relativ eng ausgebildet ist, wodurch nur eine relativ niedrige Zündstabilität erreicht werden kann.

Weitere gasbetriebene Brennkraftmaschinen mit Gaseinblasung direkt in den Brennraum sind aus der US 5,329,908 A und der US 5,941,210 A bekannt.

Die DE 199 23 346 A1 beschreibt eine Brennkraftmaschine mit wenigstens einem Zylinder, welcher mit einer Druckspeicherkammer verbindbar ist, die taktweise bei der Verbrennungsexplosion Verbrennungsgas speichert und dieses vor, bzw. zu der nächsten Verbrennungsexplosion direkt oder indirekt wieder in den Verbrennungsraum abgibt. Der Verbrennungsraum ist über ein Ventil mit einer Kraftstoffaufbereitungskammer verbindbar, in der eine Kraftstoffaufbereitungseinrichtung angeordnet ist. Die Kraftstoffaufbereitungskammer ist mit der Druckspeicherkammer verbindbar. In der Aufbereitungskammer wird der Treibstoff oder ein Treibstoffgemisch optimal aufbereitet und dann von dem mit hohem Druck und großer Wärme gespeicherten Verbrennungsgas in den Verbrennungsraum gespült, wo eine Vermischung mit Frischluft stattfindet.

Die US 4,865,001 und die EP 0 798 453 A1 offenbaren Einblasevorrichtungen für gasbetriebene Brennkraftmaschinen, welche jeweils mit dem Brennraum über ein Ventil verbindbare Kammern aufweisen, wobei in die Kammer eine Gaszuführleitung einmündet.

Ferner ist es bekannt, bei mit Flüssigkraftstoff betriebenen Brennkraftmaschinen eine luftunterstützte Einspritzung des Kraftstoffes in den Brennraum durchzuführen. Die US 6,161,527 A zeigt beispielsweise ein derartiges luftunterstütztes Kraftstoffeinspritzsystem, bei dem Kraftstoff mit Luft vorgemischt und dieses Gemisch über ein gesteuertes Ventil in den Brennraum eingespritzt wird. Die AT 407.559 B beschreibt eine Einrichtung zum Einbringen von Kraftstoff in den Brennraum einer Brennkraftmaschine, mit der während eines Arbeitszyklus Gas über ein gesteuertes Hubventil dem Brennraum entnommen und einer Kammer zugeführt wird. Das Gas wird in der Kammer zwischengespeichert und in das Gas wird der durch eine Pumpe geförderter Kraftstoffe eingespritzt. Im darauffolgenden Arbeitszyklus wird das Gemisch aus Kraftstoff und Gas in den Brennraum eingeblasen. Dadurch lässt sich eine Ladungsschichtung im Brennraum erzeugen und der Wirkungsgrad und die Schadstoffemissionen einfach und wirkungsvoll verbessern.

Aufgabe der Erfindung ist es, die genannten Nachteile zu vermeiden und bei einer gasbetriebenen Brennkraftmaschine Stickoxid- und Kohlenwasserstoffemissionen wesentlich zu reduzieren.

Erfindungsgemäß wird dies dadurch erreicht, dass das Brenngas mit dem, dem Brennraum zuvor entnommenen Gas vermischt wird und dass während eines Arbeitszyklus eine relativ kleine Menge (etwa 6 bis 12 cm³) verdichteten heißen Gases aus dem Brennraum entnommen und in der Kammer gespeichert wird, dass das Brenngas in das heiße Gas eingeblasen wird und dass das gespeicherte Gasgemisch in den Brennraum im darauffolgenden Zyklus eingeblasen wird. Das Gasgemisch wird dabei vorzugsweise in einem Kurbelwinkelbereich zwischen etwa 130° bis 45° Kurbelwinkel vor dem oberen Totpunkt in den Brennraum eingeblasen.

Das Brenngas kann dabei in der Kammer mit Luft oder mit dem Brennraum entnommenem Gas vermischt werden.

Das Brenngas wird mit Luft oder dem Brennraum entnommenem Gas vorgemischt in den Brennraum geblasen. Im Brennraum entsteht eine durch die Einblasung gesteuerte Schichtladung, welche einen sehr weiten brennbaren Gemischbereich aufweist. Durch die hohe Zündstabilität können die Kohlenwasserstoffemissionen wesentlich reduziert werden. Da nur im sehr mageren Gemischbereich gefahren wird, entstehen nur sehr geringe NOₓ-Emissionen.

Das schaltbare Ventil der Einblasevorrichtung kann mechanisch, elektrisch, hydraulisch oder pneumatisch betätigt werden.

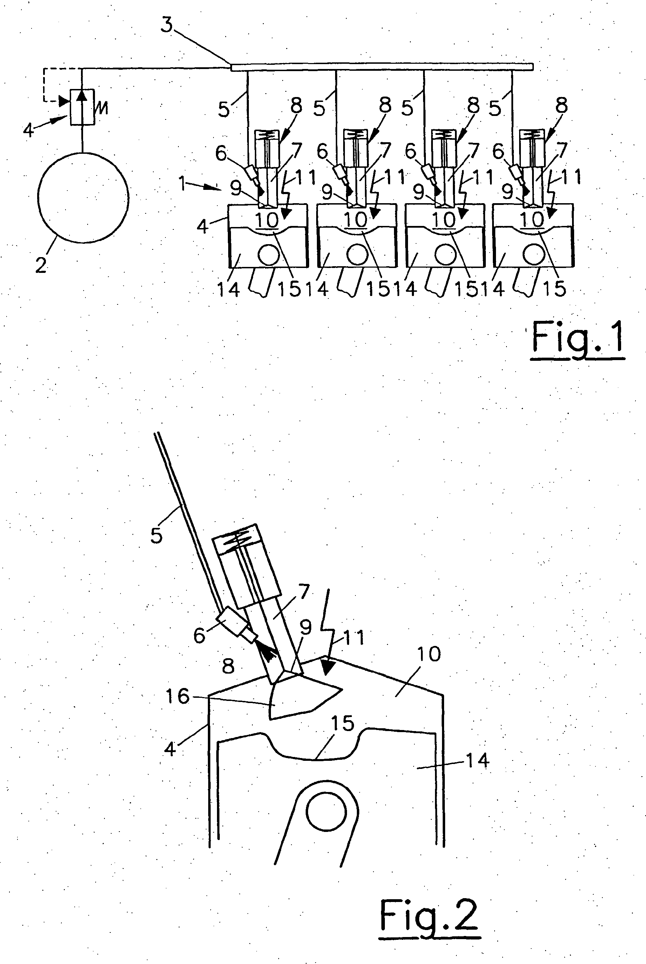

Die Erfindung wird im Folgenden anhand der Figuren näher erläutert. Es zeigen schematisch
- Fig. 1: die erfindungsgemäße Brennkraftmaschine und
- Fig. 2: einen Zylinder dieser Brennkraftmaschine.

Die gasbetriebene Brennkraftmaschine 1 weist einen Hochdruckspeicher 2 für das Brenngas, welches beispielsweise Erdgas, Wasserstoff, ein Gemisch von brennbaren Gasen oder dergleichen sein kann, auf. Vom Hochdruckspeicher 2 geht eine Verteilerleitung 3 aus, wobei zwischen Verteilerleitung 3 und Hochdruckspeicher 2 ein Druckregler 4 angeordnet ist, welcher das unter einem Druck von etwa 200 bar im Hochdruckspeicher 2 gespeicherte Brenngas auf einen Versorgungsdruck von beispielsweise etwa 6 bar drosselt. Von der Versorgungsleitung 3 geht pro Zylinder 4 mindestens eine Gaszuführleitung 5 aus, welche über ein Steuerventil 6 in eine Kammer 7 einer Einblaseeinrichtung 8 einmündet. Die Kammer 7 ist über ein schaltbares Ventil 9, vorzugsweise ein Hubventil, mit dem Brennraum eines Zylinders 4 verbunden. Das Ventil 9 kann hydraulisch, pneumatisch, mechanisch oder elektrisch betätigbar sein.

Mit Bezugszeichen 11 ist eine in den Brennraum 10 mündende Zündeinrichtung bezeichnet.

Mit Bezugszeichen 14 ist ein im Zylinder 4 hin- und her gehender, eine Kolbenmulde 15 aufweisender Kolben bezeichnet.

Die Kammer 7 der Einblasevorrichtung 8 dient als Vormischraum und als Gasspeicher. Das Brenngas wird über das Steuerventil 6 direkt in die Kammer 7 eingeblasen. Erfolgt die Durchmischung des Brenngases mit dem Brennraum zuvor entnommenem Gas, so wird durch die Einblasevorrichtung 8 selbst eine relativ kleine Menge von etwa 6 bis 12 cm³ (Größe der Kammer 7) verdichteten heißen Gases aus den Brennraum 10 während eines Arbeitszyklus entnommen, indem das Ventil 9 eine entsprechend lange Zeit nach Beendigung des Einblasevorganges in den Brennraum 10 offengehalten wird. Dieses dem Brennraum 10 entnommene Gas wird in der Kammer 7 zwischengespeichert und in das in der Kammer 7 gespeicherte Gas danach das Brenngas über das Steuerventil 6 eingeblasen. Im darauf folgenden Zyklus wird das Gemisch aus Brenngas und dem Brennraum 10 entnommenen Gas in den Brennraum 10 eingeblasen, wodurch eine Schichtladung 16 im Brennraum 10 erzeugt wird. Das in den Brennraum 10 eingeblasene Gas-Gemisch weist eine lokale Luftzahl zwischen 1 bis 1,7 auf.

Durch den großen brennbaren mageren Gemischbereich können sowohl die NOₓ-Emissionen, als auch die Kohlenwasserstoffemissionen entscheidend verringert werden.

## Patentansprüche

1. Verfahren zum Betreiben einer mit Gas betriebenen Brennkraftmaschine, wobei das Gas über eine Einblasevorrichtung (8) in einen Brennraum (10) eingeblasen und eine Schichtladung (16) erzeugt wird, wobei ein Brenngas, vorzugsweise Erdgas, Wasserstoff oder ein Gemisch aus brennbaren Gasen, in eine vom Brennraum (10) getrennte und über ein schaltbares Ventil (6) mit diesem verbindbare Kammer (7) eingeblasen und mit einem Zweitgas vermischt wird, und dass dieses Gasgemisch durch Öffnen des schaltbaren Ventils (6) direkt in den Brennraum (10) eingeblasen wird, **dadurch gekennzeichnet, dass** das Brenngas mit dem, dem Brennraum (10) zuvor entnommenen Gas vermischt wird und dass während eines Arbeitszyklus eine relativ kleine Menge (etwa 6 bis 12 cm³) verdichteten heißen Gases aus dem Brennraum (10) entnommen und in der Kammer (7) gespeichert wird, dass das Brenngas in das heiße Gas eingeblasen wird und dass das gespeicherte Gasgemisch in den Brennraum (10) im darauffolgenden Zyklus eingeblasen wird.

2. Verfahren nach Anspruch 1, **dadurch gekennzeichnet, dass** das Gasgemisch in einem Kurbelwinkelbereich zwischen etwa 130° bis 45° vor dem oberen Totpunkt in den Brennraum (10) eingeblasen wird.

3. Verfahren nach Anspruch 1 oder 2, **dadurch gekennzeichnet, dass** das Brenngas mit Luft vermischt wird.

## Claims

1. A method for operating a gas-operated internal combustion engine, with the gas being injected into the combustion chamber (10) by way of an injection apparatus (8) and a stratified charge (16) being produced, with a fuel gas, preferably natural gas, hydrogen or a mixture of combustible gases, being injected into a chamber (7) which is separated from the combustion chamber (10) and can be connected with the same by means of a switchable valve (6) and is mixed with a second gas, and that said gas mixture is injected directly into the combustion chamber (10) by opening the switchable valve (6), **characterized in that** the fuel gas is mixed with the gas taken previously from the combustion chamber (10) and that during an operating cycle a relatively small quantity (approx. 6 to 12 cm³) of compressed hot gas is taken from the combustion chamber (10) and is stored in the chamber (7), that the fuel gas is injected into the hot gas and that the stored gas mixture is injected into the combustion chamber (10) in the subsequent cycle.

2. A method according to claim 1, **characterized in that** the gas mixture is injected into the combustion chamber (10) in a crank angle range of between approximately 130° to 45° before the upper dead center.

3. A method according to claim 1 or 2, wherein the fuel gas is mixed with air.

## Revendications

1. Procédé de fonctionnement d'un moteur à combustion interne fonctionnant au gaz, où le gaz est insufflé dans une chambre de combustion (10) par l'intermédiaire d'un dispositif d'insufflation (8) et une alimentation stratifiée (16) est produite, un gaz de combustion, de préférence du gaz naturel, de l'hydrogène ou un mélange de gaz combustibles étant insufflé dans une chambre (7), séparée de la chambre de combustion (10) et susceptible d'être reliée à celle-ci par une soupape (6) commutable, et est mélangé à un deuxième gaz, et en ce que ce mélange de gaz est insufflé directement dans la chambre de combustion (10) par ouverture de la soupape (6) commutable, **caractérisé en ce que** le gaz de combustion est mélangé au gaz préalablement prélevé de la chambre de combustion (10) et **en ce que** pendant un cycle de travail, une quantité relativement faible (à peu près de 6 à 12 cm³) de gaz chaud comprimé est prélevée de la chambre de combustion (10) et stockée dans la chambre (7), **en ce que** le gaz combustible est insufflé dans le gaz chaud et **en ce que** le mélange de gaz stocké est insufflé dans la chambre de combustion (10), lors du cycle subséquent.

2. Procédé selon la revendication 1, **caractérisé en ce que** le mélange de gaz est insufflé dans la chambre de combustion (10) dans une plage d'angle de vilebrequin, comprise entre environ 130° à 45° avant le point mort supérieur.

3. Procédé selon la revendication 1 ou 2, **caractérisé en ce que** le gaz de combustion est mélangé à de l'air.
